Europäisches Patentamt

European Patent Office

Office européen des brevets

(19)

(11) **EP 1 333 632 A1**

(12) **EUROPÄISCHE PATENTANMELDUNG**

(43) Veröffentlichungstag:
06.08.2003 Patentblatt 2003/32

(51) Int Cl.⁷: **H04L 25/02**

(21) Anmeldenummer: 02002411.3

(22) Anmeldetag: 31.01.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Baier, Paul-Walter, Prof.**
**67661 Kaiserslautern (DE)**

• **Costa, Elena, Dr.**
**85748 Garching (DE)**
• **Haas, Harald, Dr.**
**83607 Holzkirchen (DE)**
• **Maniatis, Ioannis**
**67655 Kaiserslautern (DE)**
• **Schulz, Egon, Dr.**
**80993 München (DE)**
• **Sklavos, Alexandros**
**67633 Kaiserslautern (DE)**
• **Weber, Tobias**
**67731 Otterbach (DE)**

(54) **Zuweisung von Pilotsignaturen zur Kanalschätzung in einem zellularen Funkkommunikationssystem**

(57) Die Erfindung betrifft ein Verfahren zur Erzeugung von Pilotsignaturen zur Kanalschätzung in einem zellularen Funk-Kommunikationssystem mit einer sendenden Teilnehmerstation und einer einer Funkzelle zugeordneten empfangenden Basisstationen, die über einen Aufwärtsfunkkanal miteinander verbunden sind. Dabei basiert die Kanalschätzung des Aufwärtsfunkkanals auf einer Analyse einer von der einen Teilnehmerstation gesendeten Pilotsignatur. Erfindungsgemäß wird jeder Teilnehmerstation der einen Funkzelle als Pilotsignatur ein unterschiedlicher Spaltenvektor einer Hadamard-Matrix zugeordnet. Dieses erfindungsgemäße Verfahren führt zu einer vernachlässigbaren Degradation des Signal-Stör-Verhältnisses.

EP 1 333 632 A1

**Beschreibung**

Die Erfindung betrifft ein Verfahren zur Erzeugung von Pilotsignaturen zur Kanalschätzung in einem zellularen Funk-Kommunikationssystem mit mindestens einer sendenden Teilnehmerstation und mindestens einer einer Funkzelle zugeordneten empfangenden Basisstationen, nach dem Oberbegriff des Anspruchs 1.

In Funk-Kommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Teilnehmerstation bzw. Basisstation) übertragen. Das Abstrahlen der elektromagnetischen Wellen erfolgt dabei mit Trägerfrequenzen, die in dem für das jeweilige System vorgesehenen Frequenzband liegen.

Für zukünftige Funk-Kommunikationssysteme mit CDMA- oder OFDM-Übertragungsverfahren, wie beispielsweise UMTS (Universal Mobile Telecommunication System), Hiperlan, IEEE802.11a oder DVB (Digital Video Broadcast) sind Frequenzen im Frequenzband von ca. 2-6 GHz vorgesehen. Diese Systeme werden entwickelt mit den Zielen weltweiter Funkabdeckung und/oder einem großen Angebot an Diensten zur Datenübertragung und vor allem einer flexiblen Verwaltung der Kapazität der Funkschnittstelle, die bei Funk-Kommunikationssystemen die Schnittstelle mit den geringsten Ressourcen ist.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder zumindest im wesentlichen orthogonal, wodurch ein Empfänger die ihm zugedachte Signalleistung erkennt und andere Signale unterdrückt. Durch CDMA wird die Funkressource Leistung durch Spreizcodes teilnehmerstationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluß im Zeit-Frequenz Bereich aufspannt. Die während einer Zeiteinheit auf den orthogonalen Unterträgern übermittelten zusammengefassten Datensymbole werden als OFDM Symbole bezeichnet.

Bei Vielträger-Codebereichs-Vielfachzugriffsverfahren (MC-CDMA; Multi Carrier-CDMA) handelt es sich um eine Kombination des CDMA und des OFDM Verfahrens, wobei die Spreizung im Frequenzraum angewandt wird. Auf jeden orthogonalen Unterträger des OFDM Verfahrens werden die Chips der Codes unterschiedlicher Teilnehmerstationen zeitlich parallel projiziert, wobei die Codelänge, d.h. die Anzahl der Chips, der Zahl der Unterträger entspricht. Durch MC-CDMA werden die Funkressourcen Frequenz und Leistung teilnehmerstationsspezifisch separiert.

Bei der Funkübertragung zwischen einer Sendestation und einer Empfangsstation eines Funk-Kommunikationssystems kommt es nun infolge der Frequenzselektivität der Übertragungskanäle im Hinblick auf die Übertragungseigenschaften zu Interferenzerscheinungen, die als Intersysmbolinterferenz und Vielfachzugriffsinterferenzen bekannt sind. Diese Interferenzen verzerren die Sendesignale umso stärker, je größer die Übertragungsbandbreite des Übertragungskanal ist. Dies ist daher besonders relevant bei breitbandigen CDMA bzw. OFDM Funk-Kommunikationssystemen.

Herkömmlicherweise werden die Sendesignale an der Sendestation ohne Berücksichtigung der wirksamen Funkkanäle generiert. Die dann im Empfänger auftretenden Interferenzerscheinungen werden, zumindest näherungsweise, durch entsprechende angepasste und im allgemeinen sehr aufwendige Verfahren zum Detektieren der übertragenen Daten an den Empfangsstationen beseitigt.

Zur effizienten Unterdrückung der Interferenzerscheinungen der wirksamen Übertragungskanäle im Empfänger, insbesondere bei einem OFDM Vielfachzugriffsverfahren, der über eine Funkschnittstelle übertragenen Daten ist eine effiziente Schätzung der Kanaleigenschaften von großer Bedeutung. Eine Möglichkeit der Kanalschätzung besteht darin, sendeseitig komplexe Amplituden zu übertragen, die im Empfänger bekannt sind. Dies bekannten komplexen Amplituden werden allgemein als Pilotsymbole bezeichnet, die ihrerseits mit speziellen Pilotsignaturen datenhaltig sind. Aus der Analyse dieser Pilotsymbole mit spezifischen Pilotsignaturen einzelner Teilnehmerstationen im Empfänger ist es möglich, die Interferenzerscheinungen des wirksamen Funkkanals zumindest teilsweise zu kompensieren.

Bei einem Mehrteilnehmer Funk-Kommunikationssystem, d.h. bei einem System mit gegebenenfalls mehreren Teilnehmerstationen innerhalb einer Funkzelle, ist es möglich, dass mehrere Teilnehmerstationen gleichzeitig ihre Pilotsymbole, mit jeweils unterschiedlichen Pilotsignaturen, übermitteln und sich damit die komplexen Summenamplituden der Signale der einzelnen Teilnehmer im Empfänger überlagern. Die Kanalschätzung muss in diesem Fall anhand der Kenntnis der Pilotsymbole aller sendenden Teilnehmerstationen und den gemessenen komplexen Signalamplituden des Empfangssignals für alle Teilnehmerstationen gemeinsam durchgeführt werden. Im Vergleich zum dem Fall einer einzelnen Teilnehmerstation ergibt sich in Mehrteilnehmer Funk-Kommunikationssystemen jedoch aufgrund der gleichzeitigen Aktivität mehrerer Teilnehmerstationen eine Degradation des Signal-Stör-Verhältnisses (SNR), d.h. für einen einzelnen Teilnehmer führen die jeweils anderen Teilnehmer zu einer Erhöhung der Interferenzerscheinungen und damit zu einer Erniedrigung/Degradation des Signal-Stör-Verhältnisses. Bei der Kanalschätzung einer Teilnehmerstation ist die SNR-Degradation die entscheidende Größe für die Güte der Kanalschätzung.

Mit Hilfe der Pilotsignaturen ist es also möglich, die Interferenzerscheinungen zwischen den Teilnehmerstationen positiv zu beeinflussen. Dabei spielt die Erzeugung von Pilotsignaturen zur Kanalschätzung in einem zellularen Funk-Kommunikationssystem mit mindestens einer sendenden Teilnehmerstation und mindestens einer einer Funkzelle zugeordneten empfangenden Basisstationen, die über einen Aufwärtsfunkkanal miteinander verbunden sind, eine wichtige Rolle. Die Kanalschätzung des Aufwärtsfunkkanals basiert dabei auf einer Analyse einer von der mindestens einen Teilnehmerstation gesendeten Pilotsignatur.

Der Erfindung liegt daher die Aufgabe zugrunde, ein verbessertes Verfahren zum Erzeugen von Pilotsignaturen aufzuzeigen. Insbesondere sollen die für die einzelne Teilnehmerstationen erzeugten Pilotsignaturen möglichst zu einer vernachlässigbaren Degradation des Signal-Stör-Verhältnisses führen. Zusätzlich sollen die so erzeugten Pilotsignaturen in mehreren Funkzellen angewandt werden können, so dass auch zwischen der Teilnehmerstationen unterschiedlicher Funkzellen die Degradation des Signal-Stör-Verhältnisses vernachlässigbar ist.

Diese Aufgabe wird hinsichtlich des Verfahrens durch ein Verfahren mit den Merkmalen nach Anspruch 1 gelöst.

Ausgestaltungen und Weiterbildungen der Erfindung sind Gegenstand der Unteransprüche.

Erfindungsgemäß wird jeder Teilnehmerstation der mindestens einen Funkzelle als Pilotsignatur ein unterschiedlicher Spaltenvektor einer Hadamard-Matrix zugeordnet.

Die Verwendung der Spaltenvektoren der Hadamard Matrix als Pilotsignaturen führt dazu, dass die Degradation des Signal-Stör-Verhältnisses im wesentlichen bis auf 0 dB absinkt und damit minimal ist. Eine störende Beeinflussung durch Interferenzerscheinungen durch Pilotsignaturen anderer Teilnehmerstationen ist bei dieser Wahl der Pilotsignaturen ausgeschlossen. Die Hadamard Matrix $W^{(N)}$ einer Dimension NxN, mit N einer Zahl der Potenz zwei, hat dabei folgende Gestalt

$$W^{(N)} = \begin{pmatrix} W_{1,1}^{(N)} & \cdots & W_{1,N}^{(N)} \\ \vdots & \ddots & \vdots \\ W_{N,1}^{(N)} & \cdots & W_{N,N}^{(N)} \end{pmatrix}.$$

Beginnend bei der Hadamard Matrix $W^{(1)}$ der Dimension 1X1

$$W^{(1)} = (1)$$

werden die Hadamard Matrizen höherer Dimension rekursiv gebildet; die Elemente $W^{(2 \cdot N)}$ (der Hadamard Matrix $W^{(2 \cdot N)}$ der Dimension 2Nx2N erhält man aus den Elementen $W_{i,j}^{(N)}$ der Hadamard Matrix $W^{(N)}$ der Dimension NxN entsprechend mit i und j natürlichen Zahlen

$$W_{i,j}^{(2 \cdot N)} = \begin{cases} W_{i,j}^{(N)} & i \leq N; j \leq N \\ W_{i,j-N}^{(N)} & i \leq N; j > N \\ W_{i-N,j}^{(N)} & i > N; j \leq N \\ -W_{i-N,j-N}^{(N)} & i > N; j > N \end{cases}.$$

Neben der mininamelen Degradation des Signal-Stör-Verhältnisses durch diese Wahl der Pilotsignaturen ist auch kein großer Aufwand für den Entwurf der Pilotsignaturen von Nöten. Die Generierung der Spaltenvektoren der Hadamard Matrizen ist ein einfach durchzuführendes Verfahren, dass einen geringen Rechenaufwand erfordert. Desweiteren weist der Kanalschätzer eine einfach und in allen Teilnehmerstationen wieder verwendbare Struktur auf. Die Kanalschätzung ist für alle Teilnehmerstationen identisch, wobei sich die einzelnen Teilnehmerstationen nur durch die unterschiedlichen Pilotsignaturen unterscheiden. Üblicherweise werden die Spaltenvektoren der Hadamard Matrizen auch als Walsh Codes bezeichnet.

In Weiterbildung der Erfindung

- werden aus jeweils in der Hadamard-Matrix aufeinanderfolgenden Spaltenvektoren der Hadamard-Matrix entsprechend einer Mehrzahl an jeweils benachbarten Funkzellen eine Mehrzahl von nicht überlappenden Untermatrizen gebildet, wobei die Anzahl der Untermatrizen der Anzahl an Funkzellen der Mehrzahl an Funkzellen entspricht,
- wird jeder Funkzelle der Mehrzahl der Funkzellen eine andere Untermatrix der Hadamard-Matrix zugeordnet und
- wird jeder Teilnehmerstation jeder Funkzelle der Mehrzahl der Funkzellen als Pilotsignatur ein unterschiedlicher Spaltenvektor der dieser Funkzelle der Mehrzahl der Funkzellen zugeordneten Untermatrix der Hadamard-Matrix zugeordnet.

Durch die Aufteilung der Hadamard Matrix in Untermatrizen ist es möglich, mehreren Funkzellen, die jeweils eine gewisse Anzahl an Teilnehmerstationen umfassen, eine Untermatrix zuzuweisen. Teilnehmerstationen in den einzelnen Funkzellen werden dann wiederum die Spaltenvektoren der der Funkzelle zugeordneten Untermatrix als Pilotsignaturen zugeordnet. Die Anzahl der Teilnehmerstationen in den Funkzellen ist dabei durch die Anzahl der Spaltenvektoren in der dazugehörigen Untermatirx beschränkt. Durch das erfindungsgemäße Verfahren ist es also möglich, unterschiedliche Pilotsignaturen nicht nur für eine Funkzelle zu erzeugen, sonderen auch für mehrere benachbarte Funkzellen, die sich durch die Interferenzerscheinungen negativ beeinflussen können. Durch diese erfindungsgemäße Aufteilung der Spaltenvektoren ist es möglich, dass zum einen die Degradation des Signal-Stör-Verhältnisses innerhalb der Funkzelle 0 dB beträgt, zum anderen die Degradation des Signal-Stör-Verhältnisses zwischen den Funkzellen, denen die jeweiligen Untermatirzen zugeordnet sind, auch 0 dB beträgt. Die Anzahl der Funkzellen, für die die Untermatrizen, und die dazugehörigen Spaltenvektoren, in einer Hadamard Matrix generiert werden ist frei wählbar und ist nur durch die Größe der Hadamard Matrix beschränkt. Wird die Anzahl der Untermatrizen in der Hadamard Matrix reduziert, so kann die Anzahl der möglichen Teilnehmerstationen pro Unterzelle zunehmen. Die Verwendung der Hadamard Matrix muss nicht ausschließlich für das gesamte Funk-Kommunikationssystem vorgesehen werden, sonderen kann auf einen Teil der Funkzellen beschränkt werden. Wird die Zuordnung der Spaltenvektoren nicht nach dem erfindungsgemäßen Verfahren durchgeführt, sondern zufällig jeder Teilnehmerstation ein Spaltenvektor einer Hadamard Matrix zugeordnet, so führt dies dazu, dass die Degradation des Signal-Stör-Verhältnisses in der Regel in der Größenordnung von mindestens 3 dB liegt.

In Weiterbildung der Erfindung weist jede Untermatrix der Hadamard-Matrix eine identische Anzahl an Spaltenvektoren auf, wobei die Anzahl der Spaltenvektoren jeder Untermatrix ein $2^N$-ter Teil der Anzahl der Spaltenvektoren der Hadamard-Matrix ist, mit N einer natürlichen Zahl. Durch diese Aufteilung ist die Zahl der Funkzellen, denen eine Untermatrix zugeordnet werden kann, gleich 2N, wobei jede Funkzelle die identische Anzahl an Teilnehmerstationen mit Pilotsignaturen versorgen kann.

Mit Vorteil wird im Funk-Kommunikationssystem die Hadamard-Matrix nach einem bestimmten räumlichen Abstand von der einen Mehrzahl an jeweils benachbarten Funkzellen in mindestens einer anderen Mehrzahl an anderen jeweils benachbarten Funkzellen wiederverwendet. Die Funkzellen, die die Untermatrizen einer Hadamard Matrix zugeordnet bekommen, können zu einer Gruppe zusammengefasst werden. Räumlich getrennt, das bedeutet, dass die Interferenzerscheinungen durch die Piltosignaturen zwischen den einzelnen Gruppen vernachlässigbar sind, können die Gruppen die Hadamard Matrix wiederverwenden und so für das gesamte Funk-Kommunikationssystem eingesetzt werden. Die Zahl der Teilnehmerstationen, die in einer Funkzelle versorgt werden können, ist dabei durch die Dimension der Hadamard Matrix und somit durch die Anzahl der in einer Gruppe zusammengefassten Funkzellen bestimmt. Die Interferenzerscheinungen durch Pilotsignaturen anderer Gruppen haben durch die Eigenschaften der Spaltenvektoren der Hadamard Matrizen den Charakter von weißem Rauschen, so dass durch diese Interferenzerscheinungen keine zusätzlichen Komplikationen zu erwarten sind.

Mit besonderem Vorteil findet die Erfindung eine Anwendung, wenn das Funk-Kommunikationssystem nach dem OFDM Standard spezifiziert ist. Bei OFDM Funk-Kommunikationesystemen handelt es sich um sehr breitbandige Funksysteme, mit zahlreichen Subträgern, bei denen die Kanalschätzung wesentlich zur korrekten Detektion der Empfangssignals beiträgt. Bei der Funkübertragung dieser Systeme kommt es zwischen einer Sendestation und einer Empfangsstation infolge der Frequenzselektivität der Übertragungskanäle zu Interferenzerscheinungen, die als Intersysmbolinterferenz und Vielfachzugriffsinterferenzen bekannt sind. Diese Interferenzen verzerren die Sendesignale umso stärker, je größer die Übertragungsbandbreite des Übertragungskanal ist. Das erfindungsgemäße Verfahren kann insbesondere hier signifikat zur Reduzierung der Interferenzerscheinungen durch Pilotsignaturen beitragen.

Als Regel in OFDM Funk-Kommunikationssystemen gilt, dass die Zahl der Teilnehmerstationen in den Funkzellen einer Gruppe multipliziert mit der Kanallänge (Länge der Impulsantwort) maximal gleich der Anzahl der Subträger N ist und damit der Dimension NxN der Hadamard Matrix entspricht. Im allgemeinen ist die Zahl der Subträger um einiges größer als die Kanallänge.

In Weiterbildung der Erfindung umfasst das OFDM Funk-Kommunikationssystem eine Anzahl N an Subträgern, mit N einer Zahl der Potenz 2, und die Hardamard Matrix ist dementsprechend mindestens von der Dimension NxN. Für den Fall des OFDM Funk-Kommunikationssystems kann die Hadamard Matrix derart an das Funk-Kommunikationssystem angepasst werden, dass die Dimension der Hadamard Matrix gleich der Anzahl der Subträger ist.

Im Hinblick auf das zellulare Funk-Kommunikationssystem wird die oben genannte Aufgabe durch ein Funk-Kommunikationssystem mit den Merkmalen nach Anspruch 7 gelöst.

Erfindungsgemäß umfasst das Funk-Kommunikationssystem Mittel zur Zuordnung von Spaltenvektoren einer Hadamard-Matrix an Teilnehmerstation als Pilotsignatur.

Das Funk-Kommunikationssystem eignet sich insbesondere zur Durchführung des oben beschriebenen Verfahrens.

Für die Erfindung sind in einem Funk-Kommunikationssystem insbesondere die Komponenten Basisstationen, Empfangsvorrichtungen, Teilnehmerstaionen und Sendevorrichtungen von Bedeutung.

Dabei umfassen jede Basisstation und jede Empfangsvorrichtung mindestens Mittel zum Empfangen und zur Analyse einer von der mindestens einen Teilnehmerstation gesendeten Pilotsignatur.

Ferner umfassen jede Teilnehmerstation und jede Sendevorrichtugen mindestens

- Mittel zur Zuordnung von Spaltenvektoren einer Hadamard-Matrix als Pilotsignatur und
- Mittel zum Senden der Pilotsignatur.

Die Basisstationen, Empfangsvorrichtungen, Teilnehmerstationen und Sendevorrichtungen eignen sich insbesondere zur Durchführung des oben beschriebenen Verfahrens.

Einzelheiten und Details der Erfindung werden nachfolgend anhand einer Zeichnung und einem dargestellten Ausführungsbeispiele näher erläutert.

Hierbei zeigt:

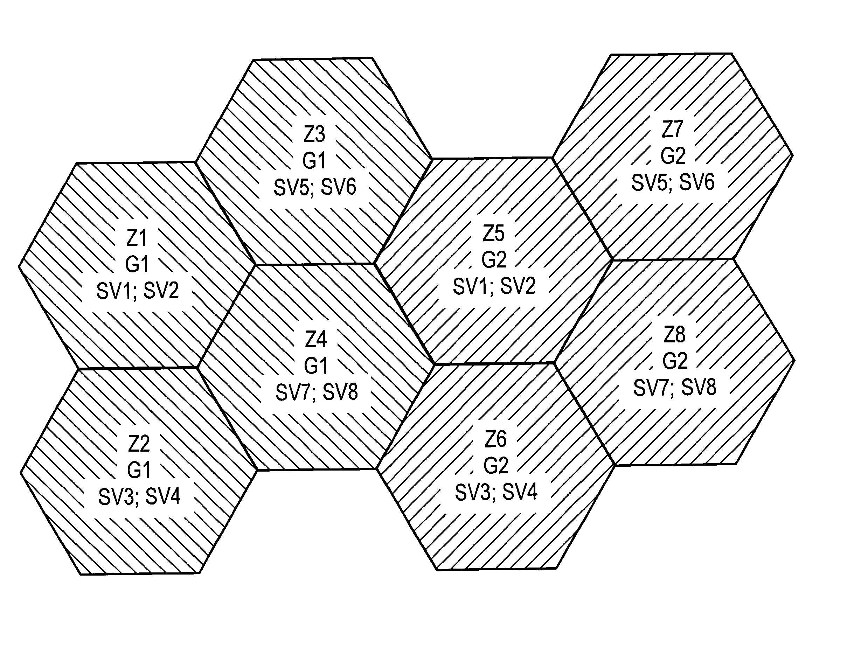

Fig. 1:     ein zellulares Funk-Kommunikationssystem mit der erfindungsgemäßen Zuordnung von Pilotsignaturen.

Figur 1 zeigt exemplarisch ein zellulares Funk-Kommunikationssystem mit acht Funkzellen Z1 bis Z8, die jeweils in zwei Gruppen G1 und G2 mit den Funkzellen Z1 bis Z4 und den Funkzellen Z5 bis Z8 aufgeteilt ist, wie es auch anhand der Schraffur der als Sechsecke dargestellten Funkzellen illustriert ist.

Ausgehend von einem OFDM Funk-Kommunikationssystem mit acht Subträgern wird die Hadamard Matrix $W^{(8)}$ der Dimension 8x8 als Ausgangspunkt für die Zuordnung der Pilotsignaturen verwendet. Nach der oben erwähnten Regel in OFDM Funk-Kommunikationssystemen, wonach die Zahl der Teilnehmerstationen in den Funkzellen einer Gruppe multipliziert mit der Kanallänge (Länge der Impulsantwort) maximal gleich der Anzahl der Subträger acht ist und damit der Dimension 8x8 der nachfolgend gezeigten Hadamard Matrix $W^{(8)}$ entspricht.

$$W^{(8)} = \begin{pmatrix} +1 & +1 & +1 & +1 & +1 & +1 & +1 & +1 \\ +1 & -1 & +1 & -1 & +1 & -1 & +1 & -1 \\ +1 & +1 & -1 & -1 & +1 & +1 & -1 & -1 \\ +1 & -1 & -1 & +1 & +1 & -1 & -1 & +1 \\ +1 & +1 & +1 & +1 & -1 & -1 & -1 & -1 \\ +1 & -1 & +1 & -1 & -1 & +1 & -1 & +1 \\ +1 & +1 & -1 & -1 & -1 & -1 & +1 & +1 \\ +1 & -1 & -1 & +1 & -1 & +1 & +1 & -1 \end{pmatrix}$$

Eine Möglichkeit die Spaltenvektoren dieser Hadamard Matrix den einzelnen Funkzellen zuzuordnen, besteht darin, die Hadamard Martix $W^{(8)}$ der Dimension 8x8 in vier Untermatrizen $W_1^{(8)}$, $W_2^{(8)}$, $W_3^{(8)}$ und $W_4^{(8)}$ der Dimension 8x2 zu unterteilen. D. h. aus jeweils in der Hadamard-Matrix $W^{(8)}$ aufeinanderfolgenden Spaltenvektoren der Hadamard-Matrix $W^{(8)}$ entsprechend einer Mehrzahl an jeweils benachbarten Funkzellen werden eine Mehrzahl von nicht über-

lappenden Untermatrizen $W_1^{(8)}$, $W_2^{(8)}$, $W_3^{(8)}$ und $W_4^{(8)}$ gebildet, wobei die Anzahl der Untermatrizen der Anzahl an Funkzellen der Mehrzahl an Funkzellen in der Gruppe G1 entspricht.

$$W_1^{(8)} = \begin{pmatrix} +1 & +1 \\ +1 & -1 \\ +1 & +1 \\ +1 & -1 \\ +1 & +1 \\ +1 & -1 \\ +1 & +1 \\ +1 & -1 \end{pmatrix}; \quad W_2^{(8)} = \begin{pmatrix} +1 & +1 \\ +1 & -1 \\ -1 & -1 \\ -1 & +1 \\ +1 & +1 \\ +1 & -1 \\ -1 & -1 \\ +-1 & +1 \end{pmatrix}; \quad W_3^{(8)} = \begin{pmatrix} +1 & +1 \\ +1 & -1 \\ +1 & +1 \\ +1 & -1 \\ -1 & -1 \\ -1 & +1 \\ -1 & -1 \\ -1 & +1 \end{pmatrix}; \quad W_4^{(8)} = \begin{pmatrix} +1 & +1 \\ +1 & -1 \\ -1 & -1 \\ -1 & +1 \\ -1 & -1 \\ -1 & +1 \\ +1 & +1 \\ +1 & -1 \end{pmatrix}$$

Dabei werden die Untermatrizen $W_1^{(8)}$ der Funkzelle Z1, $W_2^{(8)}$ der Funkzelle Z2, $W_3^{(8)}$ der Funkzelle Z3 und $W_4^{(8)}$ der Funkzelle Z4 zugeordnet.

Basierend auf diesen Untermatrizen $W_1^{(8)}$, $W_2^{(8)}$, $W_3^{(8)}$ und $W_4^{(8)}$ kann jeweils zwei Teilnehmerstation der Funkzellen Z1 bis Z4 als Pilotsignatur ein unterschiedlicher Spaltenvektor, und zwar SV1 oder SV2 in Z1, SV3 oder SV4 in Z2, SV5 oder SV6 in Z3 und SV7 oder SV8 in Z4, der Untermatrizen $W_1^{(8)}$, $W_2^{(8)}$, $W_3^{(8)}$ und $W_4^{(8)}$ der Hadamard-Matrix zugeordnet werden, mit

$$SV1 = \begin{pmatrix} +1 \\ +1 \\ +1 \\ +1 \\ +1 \\ +1 \\ +1 \\ +1 \end{pmatrix}; \quad SV2 = \begin{pmatrix} +1 \\ -1 \\ +1 \\ -1 \\ +1 \\ -1 \\ +1 \\ -1 \end{pmatrix}; \quad SV3 = \begin{pmatrix} +1 \\ +1 \\ -1 \\ -1 \\ +1 \\ +1 \\ -1 \\ -1 \end{pmatrix}; \quad SV4 = \begin{pmatrix} +1 \\ -1 \\ -1 \\ +1 \\ +1 \\ -1 \\ -1 \\ +1 \end{pmatrix}; \quad SV5 = \begin{pmatrix} +1 \\ +1 \\ +1 \\ +1 \\ -1 \\ -1 \\ -1 \\ -1 \end{pmatrix}; \quad SV6 = \begin{pmatrix} +1 \\ -1 \\ +1 \\ -1 \\ -1 \\ +1 \\ -1 \\ +1 \end{pmatrix};$$

$$SV7 = \begin{pmatrix} +1 \\ +1 \\ -1 \\ -1 \\ -1 \\ -1 \\ +1 \\ +1 \end{pmatrix}; \quad SV8 = \begin{pmatrix} +1 \\ -1 \\ -1 \\ +1 \\ -1 \\ +1 \\ +1 \\ -1 \end{pmatrix}.$$

Da die Interferenz der Pilotsignaturen in der benachbarten Gruppe G2 vernachlässigt werden kann, kann in dem beispielhaften OFDM Funk-Kommunikationssystem aus Figur 1 die Hadamard-Matrix nach einem bestimmten räumlichen Abstand von der einen Mehrzahl an jeweils benachbarten Funkzellen, nämlich in der Gruppe G1, in mindestens einer anderen Mehrzahl an anderen jeweils benachbarten Funkzellen, nämlich der Gruppe G2, wiederverwendet wird. Basierend auf diesen Untermatrizen $W_1^{(8)}$, $W_2^{(8)}$, $W_3^{(8)}$ und $W_4^{(8)}$ kann jeweils zwei Teilnehmerstation der Funkzellen Z5 bis Z8 als Pilotsignatur wieder ein unterschiedlicher Spaltenvektor, und zwar SV1 oder SV2 in Z5, SV3 oder SV4 in Z6, SV5 oder SV6 in Z7 und SV7 oder SV8 in Z8, der Untermatrizen $W_1^{(8)}$, $W_2^{(8)}$, $W_3^{(8)}$ und $W_4^{(8)}$ der Hadamard-Matrix zugeordnet werden.

Es ist aber auch möglich, die Spaltenvektoren dieser Hadamard Matrix anders zu gruppieren und dementsprechend die Aufteilung der Funkzellen anders vorzunehmen. Die Hadamard Martix $W^{(8)}$ der Dimension 8x8 kann beispielsweise auch in Untermatrizen der Dimension 8x1, 8x4 oder 8x8 unterteilt werden. Dementsprechend können entweder acht Funkzellen jeweils eine Teilnehmerstation, zwei Funkzellen jeweils vier Teilnehmerstationen oder einer Funkzelle acht Teilnehmerstaionen zugeordnet werden.

In realen OFDM Mobilfunksystemen werden typischerweise Subträgeranzahlen von 512 oder auch 1024 verwendet. Dies bedeutet, dass ausgehend von einer 512x512 oder 1024x1024 Hadamard Matrix insgesamt 512 oder 1024 Pilotsignaturen vergeben werden können. Nimmt man eine Unterteilung in 4 Untermatrizen, d.h. 4 Funkzellen, an, dann bedeutet dies, dass pro Funkzelle 128 bzw. 256 Teilnehmerstationen mit Pilotsignaturen versorgt werden können.

**Patentansprüche**

1. Verfahren zur Erzeugung von Pilotsignaturen zur Kanalschätzung in einem zellularen Funk-Kommunikationssystem mit mindestens einer sendenden Teilnehmerstation und mindestens einer einer Funkzelle (Z1 ... Z8) zugeordneten empfangenden Basisstationen, die über einen Aufwärtsfunkkanal miteinander verbunden sind, wobei die Kanalschätzung des Aufwärtsfunkkanals auf einer Analyse einer von der mindestens einen Teilnehmerstation gesendeten Pilotsignatur basiert,
**dadurch gekennzeichnet,**
**dass** jeder Teilnehmerstation der mindestens einen Funkzelle als Pilotsignatur ein unterschiedlicher Spaltenvektor (SV1 ... SV8) einer Hadamard-Matrix zugeordnet wird.

2. Verfahren nach Anspruch 1, **dadurch gekennzeichnet, dass** aus jeweils in der Hadamard-Matrix aufeinanderfolgenden Spaltenvektoren (SV1, SV2; SV3, SV4; SV5, SV6; SV7, SV8) der Hadamard-Matrix entsprechend einer Mehrzahl an jeweils benachbarten Funkzellen (Z1, Z2, Z3, Z4; Z5, Z6, Z7, Z8) eine Mehrzahl von nicht überlappenden Untermatrizen gebildet werden, wobei die Anzahl der Untermatrizen der Anzahl an Funkzellen der Mehrzahl an Funkzellen entspricht, dass jeder Funkzelle (Z1, Z2, Z3, Z4; Z5, Z6, Z7, Z8) der Mehrzahl der Funkzellen eine andere Untermatrix der Hadamard-Matrix zugeordnet wird und dass jeder Teilnehmerstation jeder Funkzelle der Mehrzahl der Funkzellen als Pilotsignatur ein unterschiedlicher Spaltenvektor (SV1, SV2; SV3, SV4; SV5, SV6; SV7, SV8) der dieser Funkzelle der Mehrzahl der Funkzellen zugeordneten Untermatrix der Hadamard-Matrix zugeordnet wird.

3. Verfahren nach Anspruch 2, **dadurch gekennzeichnet, dass** jede Untermatrix der Hadamard-Matrix eine identische Anzahl an Spaltenvektoren aufweist, wobei die Anzahl der Spaltenvektoren jeder Untermatrix ein $2^N$-ter Teil der Anzahl der Spaltenvektoren der Hadamard-Matrix ist, mit N einer natürlichen Zahl.

4. Verfahren nach einem der Ansprüche 1 bis 3, **dadurch gekennzeichnet , dass** im Funk-Kommunikationssystem die Hadamard-Matrix nach einem bestimmten räumlichen Abstand von der einen Mehrzahl an jeweils benachbarten Funkzellen (Z1, Z2, Z3, Z4) in mindestens einer anderen Mehrzahl an anderen jeweils benachbarten Funkzellen (Z5, Z6, Z7, Z8) wiederverwendet wird.

5. Verfahren nach einem der Ansprüche 1 bis 4, **dadurch gekennzeichnet, dass** das Funk-Kommunikationssystem nach dem OFDM Standard spezifiziert ist.

6. Verfahren nach Anspruch 5, **dadurch gekennzeichnet, dass** das OFDM Funk-Kommunikationssystem eine Anzahl N an Subträgern umfasst, mit N einer Zahl der Potenz 2, und die Hardamard Matrix dementsprechend mindestens von der Dimension NxN ist.

7. Zellulares Funk-Kommunikationssystem mit mindestens einer sendenden Teilnehmerstation und mindestens einer einer Funkzelle zugeordneten empfangenenden Basisstationen zur Durchführung eines Verfahrens nach einem der vorangehenden Ansprüche, umfassend:

    - Mittel zur Zuordnung von Spaltenvektoren einer Hadamard-Matrix an Teilnehmerstation als Pilotsignatur.

8. Basisstation in einem Funk-Kommunikationssystem nach Anspruch 7 umfassend:

- Mittel zum Empfangen und zur Analyse einer von der mindestens einen Teilnehmerstation gesendeten Pilotsignatur.

9. Empfangsvorrichtung in einer Basisstation nach Anspruch 8 umfassend:

- Mittel zum Empfangen und zur Analyse einer von der mindestens einen Teilnehmerstation gesendeten Pilotsignatur.

10. Teilnehmerstation in einem Funk-Kommunikationssystem nach Anspruch 7 umfassend:

- Mittel zur Zuordnung von Spaltenvektoren einer Hadamard-Matrix als Pilotsignatur
- Mittel zum Senden der Pilotsignatur.

11. Sendevorrichtung in einer Teilnehmerstation nach Anspruch 10 umfassend:

- Mittel zur Zuordnung von Spalten einer Hadamard-Matrix als Pilotsignatur
- Mittel zum Senden der Pilotsignatur.

Z7
G2
SV5; SV6

Z8
G2
SV7; SV8

Z5
G2
SV1; SV2

Z6
G2
SV3; SV4

Z3
G1
SV5; SV6

Z4
G1
SV7; SV8

Z1
G1
SV1; SV2

Z2
G1
SV3; SV4

**Europäisches Patentamt**

# EUROPÄISCHER RECHERCHENBERICHT

Nummer der Anmeldung

EP 02 00 2411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | HOSSEINIAN ET AL.: "Symbol-aided channel estimation and multiuser detection for CDMA systems using a decorrelating detector" IEEE PACIFIC RIM CONFERENCE ON COMMUNICATIONS, COMPUTERS AND SIGNAL PROCESSING , 20. - 22. August 1997, Seiten 615-619, XP000852244 New York, US * Abbildung 1 * * Seite 617, rechte Spalte, Absatz 3 * | 1,4-11 | H04L25/02 |
| Y | --- | 2,3 | |
| X | FARAKH, NOSSEK: "Data detection and channel allocation on the uplink of an SDMA mobile radio system" IEEE VEHICULAR TECHNOLOGY CONFERENCE, 4. - 7. Mai 1997, Seiten 2168-2172, XP000738748 * Absatz 3.1 * --- | 1,4-11 | |
| Y | HSIUNG, CHANG: "Performance of multi-code CDMA in a multipath fading channel" IEE PROCEEDINGS: COMMUNICATIONS, Bd. 147, Nr. 6, 11. Dezember 2000 (2000-12-11), Seiten 365-370, XP006013997 Stevenage, GB ISSN: 1350-2425 * Seite 366, linke Spalte * --- -/-- | 2,3 | RECHERCHIERTE SACHGEBIETE (Int.Cl.7) H04L |

Der vorliegende Recherchenbericht wurde für alle Patentansprüche erstellt

| Recherchenort | Abschlußdatum der Recherche | Prüfer |
|---|---|---|
| DEN HAAG | 4. Juni 2002 | Scriven, P |

**Europäisches Patentamt**

# EUROPÄISCHER RECHERCHENBERICHT

Nummer der Anmeldung

EP 02 00 2411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | JENG-KUANG HWANG : "MULTIUSER DETECTION SCHEME FOR TDMA MOBILE SYSTEMS USING SPATIAL DIVERSITY AND MMSE DECISION-FEEDBACK RECEIVER" IEEE REGION 10 CONFERENCE, 15. - 17. September 1999, Seiten 1247-1250, XP000956605 New York, US * Seite 1248, linke Spalte, Absatz 3 * ――― | 1,4-11 | |
| A | WO 00 01184 A (SIEMENS) 6. Januar 2000 (2000-01-06) * Seite 5, Zeile 36 – Seite 6, Zeile 3 * * Seite 10, Zeile 26 – Zeile 33 * * Seite 11, Zeile 4 – Zeile 9 * ――― | 1-11 | |
| A | EP 1 154 662 A (MITSUBISHI) 14. November 2001 (2001-11-14) * Spalte 1, Zeile 45 – Zeile 55 * * Spalte 4, Zeile 12 – Zeile 25 * ───── | 1-11 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 4. Juni 2002 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 02 00 2411

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 0001184 | A | 06-01-2000 | AU | 4778199 A | 17-01-2000 |
| | | | CN | 1308825 T | 15-08-2001 |
| | | | WO | 0001184 A1 | 06-01-2000 |
| | | | EP | 1092332 A1 | 18-04-2001 |
| EP 1154662 | A | 14-11-2001 | EP | 1154662 A1 | 14-11-2001 |
| | | | WO | 0186990 A1 | 15-11-2001 |

EPO FORM P0461

Für nähere Einzelheiten zu diesem Anhang : siehe Amtsblatt des Europäischen Patentamts, Nr. 12/82